(19) Europäisches Patentamt / European Patent Office / Office européen des brevets

(11) **EP 2 901 139 B1**

(12) **FASCICULE DE BREVET EUROPEEN**

(45) Date de publication et mention de la délivrance du brevet:
**02.11.2016 Bulletin 2016/44**

(21) Numéro de dépôt: **13785503.7**

(22) Date de dépôt: **27.09.2013**

(51) Int Cl.:
***G01N 21/71*** *(2006.01)*

(86) Numéro de dépôt international:
**PCT/FR2013/052300**

(87) Numéro de publication internationale:
**WO 2014/049291 (03.04.2014 Gazette 2014/14)**

(54) **METHODE ET SYSTEME D'ANALYSE DE PARTICULES DANS UN PLASMA FROID**

VERFAHREN UND SYSTEM ZUR ANALYSE VON PARTIKELN IN KALTPLASMA

METHOD AND SYSTEM FOR ANALYSING PARTICLES IN COLD PLASMA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2012 FR 1259101**

(43) Date de publication de la demande:
**05.08.2015 Bulletin 2015/32**

(73) Titulaires:
• **Centre National de la Recherche Scientifique**
**75016 Paris (FR)**
Etats contractants désignés:
**AL AT BE BG CH CY CZ DE DK EE ES FI GB GR HR HU IE IS IT LI LT LU LV MC MK MT NL NO PL PT RO RS SE SI SK SM TR**
• **Universite D'Orleans**
**45100 Orleans (FR)**
Etats contractants désignés:
**AL AT BE BG CH CY CZ DE DK EE ES FI GB GR HR HU IE IS IT LI LT LU LV MC MK MT NL NO PL PT RO RS SE SI SK SM TR**
• **Compagnie Industrielle des Lasers Cilas**
**45100 Orleans (FR)**
Etats contractants désignés:
**FR**
• **Institut National de l'Environnement Industriel et des Risques**
**60550 Verneuil-en-Halatte (FR)**
Etats contractants désignés:
**FR**

(72) Inventeurs:
• **BOUFENDI, Laïfa**
**F-45560 Saint Denis En Val (FR)**
• **MEYER, Laurent**
**F-95290 L'Isle Adam (FR)**
• **DUTOUQUET, Christophe**
**F-60300 Senlis (FR)**
• **FREJAFON, Emeric**
**F-60340 Villiers Sous Saint Leu (FR)**
• **WATTIEAUX, Gaétan**
**F-31320 Vigoulet-Auzil (FR)**

(74) Mandataire: **Duflos, Bertrand Guillaume et al**
**Cabinet Beau de Loménie**
**158, rue de l'Université**
**75340 Paris Cedex 07 (FR)**

(56) Documents cités:
**FR-A1- 2 937 419       FR-A1- 2 938 066**
**US-A1- 2008 239 312**

• **EOM G S ET AL: "Size determination of nanoparticles in low-pressure plasma with laser-induced incandescence technique", APPLIED PHYSICS LETTERS, AIP, AMERICAN INSTITUTE OF PHYSICS, MELVILLE, NY, US, vol. 83, no. 6, 11 août 2003 (2003-08-11), pages 1261-1263, XP012035779, ISSN: 0003-6951, DOI: 10.1063/1.1599965 cité dans la demande**

EP 2 901 139 B1

**Description**

L'invention concerne une méthode d'analyse de particules de faible diamètre, c'est-à-dire de diamètre inférieur à 1 μm. Ces particules peuvent être par exemple mais non exclusivement, des nanoparticules, par exemple formées par pyrolise laser. Les particules peuvent être liquides ou solides, inorganiques ou organiques. Il peut par exemple s'agir de micro-organismes, comme des bactéries. La taille des particules peut aussi atteindre plusieurs μm.

L'invention concerne en particulier l'analyse de particules contenues dans un plasma froid, celui-ci étant maintenu sous une pression très faible, à savoir inférieure à 10 hPa (mBar), voire 1 hPa (mBar).

Une telle pression est appelée dans ce qui suit « basse pression ».

Par 'plasma froid', on désigne ici un plasma qui n'est pas à l'équilibre thermodynamique. Dans les plasmas froids considérés, l'énergie des électrons est généralement inférieure à 10 eV, et en pratique peut par exemple être voisine de 3 à 5 eV. L'énergie des espèces neutres et des ions (espèces lourdes) reste quant à elle en général inférieure à un dixième d'eV.

Au fur et à mesure que la connaissance sur les plasmas progresse, dans un nombre croissant de circonstances, et en particulier dans des procédés industriels, la matière est portée à l'état de plasma froid.

Or, il est possible que des particules soient formées dans le plasma au cours de cette phase, ou encore soient présentes dans le plasma pour d'autres raisons.

Il peut être nécessaire ou utile d'analyser les particules ou la composition des particules présentes dans le plasma (c'est-à-dire dans ce document, de déterminer la stoechiométrie des éléments constituants les particules analysées, ou en d'autres termes, les proportions relatives de ces éléments au sein des particules).

De manière connue, pour évaluer la composition de particules présentes dans un plasma, on recueille ces particules dans un réceptacle, et on les transporte en laboratoire pour les analyser par des moyens d'analyse connus comme la spectrométrie optique.

Cette méthode présente l'inconvénient que les résultats sont connus relativement longtemps après que les particules ont été détectées et recueillies au sein du plasma. Lorsque les résultats d'analyse sont utilisés pour contrôler une fabrication en continu, il peut advenir que la production soit non-conforme pendant au moins toute la durée d'obtention des résultats d'analyse. Aussi, plus la durée d'analyse est faible, plus la quantité de produit non-conforme produite est réduite.

Il est connu, par ailleurs, de déterminer la taille des particules présentes dans un plasma basse pression : par exemple grâce au document Size determination of nanoparticles in low-pressure plasma with laser-induced incandescence technique, de MM.Eom G.S.et al., Applied Physics Letter, AIP American Institute of Physics, Melville, NY, US, vol.83, n°6, 11 août 2003 (2003-08-11), pages 1261-1263, ISSN : 0003-6951, DOI : 10.1063/1.1599965.

Suivant ce document, on peut déterminer la taille de particules présentes dans un plasma basse pression de la manière suivante :

- On effectue des tirs laser dans le plasma basse pression ;
- Les particules, chauffées par les tirs laser, émettent alors un rayonnement ;
- Une partie de ce rayonnement est captée par un tube photomultiplicateur et transmise à un dispositif d'acquisition.

Le signal obtenu peut alors être analysé. La taille des particules est calculée en exploitant la relation entre la taille des particules, l'évolution de la température et les propriétés thermiques du matériau constituant les particules.

Cependant, cette méthode ne permet que d'obtenir la taille des particules analysées, et non pas la composition de celles-ci. Au contraire, elle semble inapplicable pour ce qui est d'analyser la composition des particules : elle nécessite en effet de connaître a priori la composition du matériau, afin de choisir la longueur d'onde adaptée pour le laser, faute de quoi le signal retourné par les particules peut être insuffisant.

Par ailleurs, de manière connue la composition de particules diluées dans un flux de gaz peut être mesurée par la méthode « LIBS », de l'Anglais 'laser-induced breakdown spectroscopy qui signifie 'spectroscopie d'émission de plasma induit par laser'. Cette méthode est notamment divulguée par la demande de brevet FR2937419, dont l'un des co-déposants est titulaire.

Cette méthode d'analyse n'est connue que pour analyser des particules diluées dans un gaz dont a priori la pression est proche de la pression atmosphérique.

Dans de telles conditions de pression, la réalisation de tirs laser permet de créer localement des micro-plasmas. Ces micro-plasmas sont créés dans le gaz lui-même, et non dans les particules, dont la concentration est très faible. Après avoir été 'allumés', ces micro-plasmas subissent une très forte expansion ; leur volume est multiplié par un facteur qui est de l'ordre de mille. Au cours de cette expansion, ils absorbent des particules ; les particules ainsi absorbées se dissocient (au moins en partie ou au moins une partie d'entre elles). La dissociation des particules dans les micro-plasmas ne se produit donc pas directement sous l'effet des tirs laser, mais après que les particules ont été absorbées par les micro-plasmas.

En pratique, les micro-plasmas induits par laser créées lors de la mise en oeuvre de la méthode du document FR2937419 englobent quelques centaines de particules, ce qui conduit à l'émission d'un rayonnement conséquent par ces particules.

Cette méthode nécessite donc la présence d'un gaz, dans lequel se trouvent les particules, et qui puisse être porté à l'état de plasma par les tirs laser.

Or dans un plasma basse pression, la pression du gaz est extrêmement faible. Par conséquent, les tirs lasers ne permettent pas de générer des micro-plasmas dans le gaz lui-même.

Par suite, dans des plasmas basse pression, la réalisation de tirs laser ne permet *a priori* pas de former des micro-plasmas dans lesquelles des particules soient dissociées du fait de l'expansion des micro-plasmas.

Enfin, la méthode proposée par le document FR2937419 est mise en oeuvre dans un flux de gaz neutre dans lequel de fortes concentrations de particules sont charriées.

La méthode proposée par le document FR2937419 semble inutilisable pour analyser des particules contenues, en faibles concentrations, dans un plasma froid basse pression. En effet elle ne prévoit en aucune manière de piéger et d'analyser une particule individuelle.

Pour ces différentes raisons, la méthode proposée par le document FR2937419 semble inutilisable pour analyser des particules contenues dans un plasma froid basse pression.

Il existe donc un besoin d'une méthode d'analyse de particules présentes dans un plasma froid basse pression, qui notamment fournisse des informations plus rapidement que les méthodes connues quant à la présence et la composition des particules au sein du plasma examiné.

Le premier objectif de l'invention est de répondre à ce besoin.

Pour cela, l'invention comprend tout d'abord une méthode d'analyse de particules, notamment de diamètre inférieur à 1 μm, comportant les étapes suivantes :

a) on fournit un plasma froid dont une pression est inférieure à 10 hPa (mBar), et de préférence 1 hPa (mBar) ;

b) on effectue des tirs laser dans le plasma froid ;

c) à l'aide d'un dispositif de spectrométrie optique, on acquiert des spectres d'émission de la lumière émise par le plasma suite aux tirs lasers, de telle manière que pour chaque spectre acquis, une période d'acquisition commence au plus tard 100 ns après le tir laser ;

d) on détecte la présence de particules dans le plasma à partir desdits spectres d'émission.

Le dispositif de spectrométrie optique comprend principalement un collecteur de lumière relié à un spectromètre optique lui-même couplé à un détecteur.

Il s'est avéré en effet que des particules faisant partie d'un plasma basse pression peuvent être analysées par spectroscopie optique induite par laser (procédé LIBS).

Lors des tirs laser, comme indiqué précédemment, les molécules de gaz sont trop disséminées pour permettre la création d'un micro-plasma local.

Inversement, les particules elles-mêmes peuvent être irradiées par les tirs laser (en général nanoseconde), très énergétiques. Lorsqu'un tir atteint une particule, il provoque la dissociation partielle ou complète de celle-ci, avec formation d'un micro-plasma.

La lumière émise par le micro-plasma contient la signature chimique de tous les éléments contenus dans les particules présentes dans le volume d'échantillonnage et donc irradiées par le laser. Par suite, l'analyse de cette lumière à l'aide du spectromètre optique permet de détecter la présence de particules, et/ou de déterminer la composition stoechiométrique élémentaire de celles-ci.

Du fait que la pression dans le plasma est extrêmement faible, les molécules de gaz environnant les particules et prises dans le micro-plasma ne génèrent quasiment pas de rayonnement. Par suite, les spectres d'émission présentent un excellent rapport signal sur bruit, ce qui est essentiel si les particules à analyser sont présentes seulement à de faibles concentrations.

Ainsi, la méthode selon l'invention peut être mise en oeuvre dans un plasma dans lequel la concentration des particules est inférieure à $10^8$ particules/$cm^3$, voire $10^6$ particules/$cm^3$, voire même $10^5$ particules/$cm^3$.

Les micro-plasmas générés par les particules frappées par les tirs laser sont transitoire, leurs durées de vie étant estimées à seulement quelques centaines de nanosecondes.

Pour cette raison, selon l'invention (et contrairement à la méthode d'analyse de particules antérieure divulguée par le document FR2937419), il importe de commencer l'acquisition des spectres d'émission à l'aide du dispositif de spectrométrie au plus tard 100 ns après le tir laser ou après chacun des tirs laser.

Cette fenêtre d'acquisition commençant très peu de temps après le tir laser permet de capter l'essentiel des rayonnements émis par le micro-plasma. Ceux-ci décroissent en effet rapidement pour devenir imperceptibles typiquement après 1 à 2 μs.

L'enregistrement du signal peut commencer à partir de quelques dizaines de nanosecondes après le tir laser, et se poursuivre pendant généralement quelques microsecondes. Le temps d'exposition est (durée d'enregistrement) en général inférieur à 1 μs, voire 5 μs..

L'invention constitue ainsi une méthode nouvelle en métrologie des particules et notamment des nanoparticules, exploitable dans tout plasma froid basse pression, et en particulier dans un plasma froid engendré par des décharges radiofréquence.

Cette méthode peut être mise en oeuvre dans différentes circonstances ou différents contextes.

Le plasma froid fourni à l'étape a) peut tout d'abord être un plasma qui résulte de la mise en oeuvre d'un procédé industriel.

La méthode peut ainsi être utilisée pour le contrôle-qualité d'un procédé de fabrication dans lequel un plasma froid est formé, dans le cas où il est nécessaire d'évaluer la présence et/ou la composition de particules dans le plasma froid.

Certains procédés de fabrication de nanoparticules, la formation de revêtements en films minces par déposition physique en phase vapeur (PVD), ou encore par le procédé dit PECVD (Plasma Enhanced Chemical Vapor Deposition), constituent des exemples de procédés dans lesquels un plasma froid est formé. Ce plasma peut contenir des particules qu'il serait utile ou nécessaire de détecter et d'analyser.

Cependant, le plasma peut aussi être généré exprès pour pouvoir mettre en oeuvre la méthode selon l'invention. Le plasma peut en effet être mis en lévitation ; il agit alors comme un piège, utilisé à dessein pour piéger des particules éventuelles, afin de les détecter et/ou les analyser.

Dans ce cas, l'étape a) de la méthode selon l'invention (fourniture d'un plasma froid) peut se faire en deux étapes : Dans une première étape a1), on forme un plasma froid, puis dans une étape a2), on introduit les particules dans ce plasma. Le plasma froid mentionné à l'étape b) est alors celui qui contient des particules et qui est obtenu à l'issue de l'étape a2).

L'étape a) de la méthode peut également être une étape durant laquelle des particules se forment à l'intérieur d'un plasma, notamment par réaction chimique à partir des molécules de gaz présentes.

Dans ce cas, le plasma froid mentionné à l'étape b) est celui qui contient des particules et qui est obtenu à l'issue des réactions indiquées ci-dessus de formation de particules.

On comprend que lorsque le plasma est généré exprès pour la mise en oeuvre de la méthode selon l'invention, cette méthode peut être utilisée pour le contrôle-qualité de toute atmosphère ou phase gazeuse, comme par exemple pour la détection et/ou l'analyse de particules dans des gaz produits par des procédés industriels.

La méthode permet notamment la détection de différents éléments, tels que des particules organiques, des pelotes de nanotubes de carbone, des bactéries, des particules d'oxyde de titane, etc., qu'il peut être important de détecter, en particulier à des concentrations faibles.

Avantageusement, la méthode peut être mise en oeuvre sur site, en ligne, et fournir des résultats quasiment en temps réel. Elle est donc particulièrement bien adaptée à tout procédé industriel dans lequel sont produites des particules.

Dans un mode de réalisation, la méthode comporte en outre une étape d'estimation de la concentration des particules dans le plasma.

Elle peut également comprendre une étape de calcul de la concentration des particules dans le milieu (gazeux) dans lequel le plasma a été formé à l'étape a).

La concentration des particules peut notamment être calculée dans des plasmas contenant une faible densité de particules.

Le calcul peut se faire de la manière suivante :

Pour chaque tir laser, on détecte qu'une particule a été atteinte par le tir lorsque le spectre d'émission contient une ou des raies d'émissions caractéristiques des éléments constituant les particules. La probabilité de présence de particules est alors calculée en rapportant le nombre de particules détectées au nombre de tirs laser.

Un ordre de grandeur du volume d'échantillonnage est ensuite estimé.

La concentration de particules est alors obtenue en divisant la probabilité de présence d'une particule dans le volume d'échantillonnage du faisceau laser par ce volume d'échantillonnage.

Le plasma froid peut être formé dans l'air (c'est-à-dire dans une atmosphère composée principalement d'air).

Le plasma froid peut cependant également être formé dans un gaz inerte, comme par exemple l'argon ou l'hélium. Dans ce cas, avantageusement les éléments C, H, O et N éventuellement contenus dans les particules peuvent être analysés sans interférence avec ces même éléments habituellement contenu dans l'air, contrairement à ce qui se produit lorsque la méthode est mise en oeuvre dans un plasma formé dans l'air.

Ainsi, lorsque le plasma froid est formé dans un gaz inerte, la méthode selon l'invention permet de détecter et/ou d'analyser des particules carbonées. Il est ainsi possible d'analyser les particules carbonées sans interférence avec le carbone de l'air. Une application est l'analyse stoechiométrique de nanotubes de carbone contenant des éléments métalliques.

Dans un mode de réalisation particulièrement intéressant, durant les étapes b) et c), les particules sont maintenues en lévitation. Avantageusement, grâce au fait que les particules sont maintenues en lévitation, un faible nombre de particules est suffisant pour la mise en oeuvre du procédé.

Dans ce mode de mise en oeuvre, le plasma froid est le plus souvent formé à dessein pour l'analyse des particules ; dans ce cas, les particules sont en général volontairement injectées dans le plasma pour y être analysées.

Par rapport à la spectrométrie classique, l'intérêt de cette méthode est que grâce à la mise en lévitation des particules, le tir laser ne frappe pas d'autres matériaux que celui des particules (hormis le gaz dans lequel se trouvent celles-ci mais, comme cela a été indiqué, dans les spectres d'émission la partie attribuable aux molécules de gaz reste généralement très faible). Ainsi, le spectre d'émission est dépourvu de toutes émissions parasites à l'exception marginalement des raies émises par le gaz présent dans le plasma.

La méthode ainsi définie présente donc une précision importante.

De plus, l'analyse de particules en lévitation, piégées dans le volume de l'échantillon analysé, permet une analyse de particules présentes en quantités extrêmement faibles, puisque l'analyse peut aller jusqu'à être une analyse individuelle des particules.

Cette méthode peut ainsi avantageusement être appliquée à la détection et/ou l'analyse de particules présentes seulement à l'état de traces dans le gaz considéré.

La mise en lévitation peut se faire en particulier en maintenant les particules entre une électrode alimentées par une tension soit radiofréquence, soit continue, et une deuxième électrode portée à un potentiel fixe, par exemple de masse. Un tel agencement permet en effet de maintenir un plasma froid stationnaire entre les électrodes.

De plus, le maintien d'une pression faible, inférieure à 10 hPa (mBar) et de préférence à 1 hPa (mBar); permet dans certains cas d'assurer que les particules se répartissent dans tout le volume du plasma. Une pression trop importante peut conduire les particules à se positionner en périphérie du plasma, ce qui nuit à leur détection et/ou leur analyse.

Dans un mode de mise en oeuvre, au cours de l'étape a), les particules sont injectées dans le plasma principalement sous l'effet de la gravité. La gravité constitue en effet un moyen particulièrement simple pour injecter des particules dans un plasma.

Dans un mode de mise en oeuvre, à l'étape d), on analyse la composition stoechiométrique des particules à partir des spectres d'émission en calculant un spectre d'émission moyen à partir d'une pluralité de spectres correspondant à une pluralité de tirs lasers.

Pour le calcul du spectre d'émission moyen, on peut notamment ne prendre en compte que des spectres d'émission présentant au moins une ou plusieurs raie(s) d'émission attendue(s) et correspondant à un ou des éléments présents dans les particules détectées ou analysées.

Un second objectif de l'invention est de proposer un système d'analyse de particules, notamment de dimension inférieure à 1 $\mu$m, permettant d'analyser rapidement la composition de particules.

Cet objectif est atteint grâce au fait que le système comprend des moyens pour créer et entretenir un plasma froid dont la pression est inférieure à 10 hPa (mBar), et de préférence à 1 hPa (mBar), une source laser apte à effectuer des tirs ou impulsions laser, et un dispositif de spectrométrie optique comprenant un collecteur de lumière et un spectromètre optique relié à un détecteur, le dispositif de spectrométrie optique permettant l'acquisition de spectres d'émission de la lumière émise par le plasma suite aux tirs lasers de telle manière que pour chaque spectre acquis, la période d'acquisition commence au plus tard 100 ns après le tir laser.

Le spectromètre optique est naturellement agencé de manière à recevoir la partie du rayonnement émis par le plasma suite à un tir laser qui est collectée par le collecteur de lumière.

Le détecteur ou capteur relié au spectromètre optique permet un enregistrement de spectre de préférence résolu en temps. Une résolution temporelle au plus égale à environ 2 ns est souhaitable pour pouvoir fixer de manière précise le début et la fin de la période d'acquisition des spectres d'émission. Le détecteur peut être constitué notamment par une caméra CCD intensifiée.

Le collecteur de lumière peut être constitué notamment principalement par une lentille ou par une pluralité de lentilles. La ou les lentille(s) ont alors pour fonction de concentrer la lumière émise par le plasma et de la diriger vers le spectromètre, par exemple via une fibre optique. Il n'est pas nécessaire d'utiliser un télescope.

Dans un mode de réalisation, les moyens pour créer et entretenir un plasma froid sont agencés pour contenir le plasma, et maintenir les particules en lévitation dans celui-ci. Il n'y a ainsi aucun contact entre les particules et l'enceinte ou toute autre paroi ou tout autre corps ; cela permet d'assurer que la détection et/ou l'analyse de composition concerne bien les particules présentes dans le plasma.

En particulier, dans un mode de réalisation, les moyens pour créer et entretenir un plasma froid comprennent une enceinte dans laquelle sont placées des électrodes, et des moyens aptes à appliquer une tension à ces électrodes de telle sorte que des particules présentes dans le plasma soient maintenues en lévitation dans celui-ci, et le système comprend en outre un dispositif d'injection de particules dans l'enceinte.

Le plasma froid est alors formé entre les électrodes. Le plasma peut notamment être généré par les électrodes sous l'effet d'une tension fournie par une source de tension couplée aux électrodes et régulée par un dispositif de boîte d'accord.

La tension est réglée de telle sorte que les particules se répartissent de manière uniforme dans le plasma. La régularité ou l'uniformité de cette répartition peuvent être contrôlées simplement visuellement, lorsque l'enceinte est dotée de hublots transparents permettant de voir le plasma entre les électrodes.

Le plasma froid généré entre les électrodes agit alors comme un piège pour les particules qui y sont introduites, c'est-à-dire qu'il maintient celles-ci en lévitation, ce qui donne la possibilité de réaliser les tirs laser et les acquisitions par spectrométrie.

Le plasma peut être formé dans un gaz (ce terme signifiant ici une atmosphère essentiellement gazeuse, mais pouvant comporter des particules en suspension) dans lequel les particules sont présentes avant même que le plasma ne soit formé.

Dans un autre mode de réalisation, le système comporte un dispositif d'injection dans le plasma des particules à analyser : Les particules sont alors injectées dans le plasma après la formation de celui-ci.

Dans le système selon l'invention, le plasma froid est maintenu à basse pression (par exemple, quelque hPa (millibars), ou encore moins de 1 hPa (mBar). Dans ce but, dans un mode de réalisation le système peut comprendre une enceinte, et une pompe à vide apte à maintenir l'enceinte sous une pression inférieure à 10 hPa (mBar), et de préférence à 1 hPa (mBar).

Dans un mode de réalisation, les moyens pour créer et entretenir un plasma froid sont adaptés pour créer et entretenir un plasma dans lequel la concentration de particules est inférieure à $10^8$ particules/cm$^3$, voire $10^6$ particules/cm$^3$, voire même $10^5$ particules/cm$^3$.

Le dispositif de spectrométrie optique est donc adapté pour à l'étape c), acquérir des spectres d'émission provenant d'un plasma contenant une concentration de particules inférieure à $10^8$ particules/cm$^3$, voire $10^6$ particules/cm$^3$, voire même $10^5$ particules/cm$^3$.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- La figure 1 est une représentation schématique en vue du dessus d'un système de détection et d'analyse de particules selon l'invention ;
- la figure 2 est une vue de côté de la cellule plasma et de l'injecteur de poudres du système de la figure 1 ;
- les figures 3A et 3B représentent des ensembles de spectres d'émission obtenus par le système de la figure 1, respectivement pour des particules d'Al$_2$O$_3$ (figure 3A) et de SiC (figure 3B) ;
- les figures 4A et 4B représentent des spectres d'émission individuels obtenus par le système de la figure 1, respectivement pour des particules d'Al$_2$O$_3$ (figure 4A) et de SiC (figure 4B) ;
- les figures 5A et 5B représentent des spectres d'émission moyennés obtenus par le système de la figure 1, respectivement pour des particules d'Al$_2$O$_3$ (figure 5A) et de SiC (figure 5B) ; et
- la figure 6 représente des spectres d'émission obtenus par le système de la figure 1 pour des particules d'Al$_2$O$_3$, pour différentes valeurs du délai entre le tir laser et le début de l'enregistrement par le spectromètre optique.

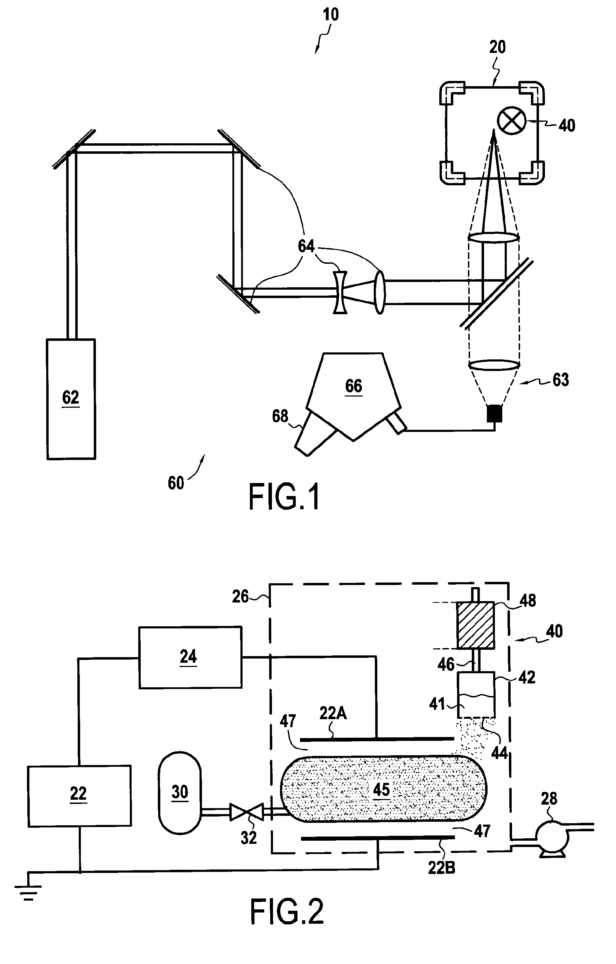

Un système 10 de détection et d'analyse de particules selon l'invention est présenté par la figure 1. Ce système 10 est constitué de trois éléments principaux :

- une cellule plasma 20 radio fréquence,
- un injecteur de poudres 40, et
- un dispositif de spectrométrie 60.

La cellule plasma (20)

La figure 2 donne une représentation schématique de la cellule plasma 20.

La cellule plasma 20 comporte essentiellement un générateur radiofréquence régulé en puissance 22, une boîte d'accord 24 et un réacteur 26.

Le réacteur ou enceinte 26 comprend une chambre rectangulaire en acier inoxydable de 10 cm de haut et 10 cm de large pourvue de quatre hublots ou visées optiques pour les diagnostics optiques. Il faut en fait au minimum deux hublots en regard l'un de l'autre pour le passage du faisceau laser et l'analyse du plasma. Ces hublots doivent être de préférence en quartz pour laisser passer le rayonnement ultraviolet (longueur d'ondes inférieures à 400nm) émis par le plasma et contenant l'information relative à la nature chimique des éléments analysés.

Deux électrodes 22 (référencées 22A et 22B) en forme de disque de 6 cm de diamètre et placées à 5 cm l'une de l'autre sont disposées à l'intérieur du réacteur 26. L'électrode du haut 22A est connectée à la borne de sortie du générateur radio fréquence 22 alors que l'électrode du bas 22B est reliée à la terre.

Une pompe à vide 28 permet de maintenir une pression constante comprise entre 0,1 et 1hPa (mBar) dans le réacteur 26.

Une bouteille d'argon 30 est reliée au réacteur 26 via une valve 32. Elle permet de remplacer l'air contenu dans le réacteur 26 par de l'argon, lorsque la détection et l'analyse de particules doivent être réalisées dans une atmosphère d'argon et non d'air (Une bouteille d'azote ou d'hélium, pour permettre la formation du plasma froid dans l'un ou l'autre de ces gaz, pourrait aussi être utilisée).

La cellule 20 permet de former un plasma froid de la manière suivante :

Tout d'abord, selon l'analyse que l'on veut effectuer sur les particules, on place le réacteur 26 sous atmosphère d'air ou d'argon. Le réacteur 26 est porté à la pression de 0,25 hPa (mBar) par la pompe à vide 28.

Des décharges électriques sont alors appliquées par les électrodes 22. Ces décharges permettent la création d'un plasma froid 45 entre les électrodes 22. La tension excitatrice a une fréquence de 13,56 MHz (D'autres fréquences, principalement dans le domaine des radiofréquences, sont naturellement utilisables).

Très rapidement après la formation du plasma 45 se créent des gaines 47 de charges d'espace. Ces gaines équilibrent la perte des électrons et des ions positifs au niveau de toutes les parois et électrodes qui sont en contact avec le plasma. Elles vont par conséquent confiner les électrons et les espèces chargées négativement.

Lorsque l'on injecte les particules (à l'état solide) dans le plasma elles se chargent négativement très rapidement par attachement électronique. Ceci est dû à la grande mobilité des électrons comparée à celle des ions positifs qui sont beaucoup plus lourds.

Par conséquent, les particules sont piégées dans le volume occupé par le plasma 45 dans le réacteur 26 et y restent en lévitation tant que le plasma est formé.

L'injecteur de poudres (40)

L'injecteur de poudre placé dans le réacteur 26 sert à introduire dans le plasma 45 la poudre 41 formée par les particules à analyser.

L'injecteur 40 se compose principalement d'un réceptacle à poudre 42, cylindrique, ayant un diamètre de 1 cm et une hauteur de 0,5 cm (les proportions ne sont pas respectées sur la figure 2). La face de l'injecteur servant à verser les particules dans le plasma comme cela va être expliqué est formée par une grille 44 percée de trous carrés de 5 $\mu$m de côté.

Le réceptacle 42 est solidaire d'une tige 46 placée dans l'entrefer d'un électroaimant 48. Lorsque ce dernier est activé, la tige effectue un mouvement vertical alternatif de haut en bas. Les secousses ainsi appliquées au réceptacle 42 provoquent le passage des particules à travers la grille.

Pour permettre l'injection des particules dans le plasma radiofréquence, le réceptacle 42 est placé au-dessus de l'électrode 22A, non pas à la verticale de celle-ci, mais plutôt (vu du dessus) légèrement à l'extérieur de la limite extérieure de cette électrode. Par suite, les particules par gravité tombent directement dans le plasma 45 par lequel elles sont captées, le plasma 45 occupant un volume bombé sur les côtés, qui déborde horizontalement autour du volume délimité par les électrodes, comme représenté sur la figure 2.

Le dispositif de spectrométrie induite par laser (60)

Le dispositif 60 comporte une source laser 62, un collecteur de lumière 63, un ensemble 64 de miroirs et de lentilles, comprenant notamment un miroir dichroïque, pour conduire le faisceau laser et le rayonnement émis par le micro-plasma induit par laser sur les particules, et un spectromètre optique 66.

La source laser 62 sert à effectuer des tirs laser à une longueur d'onde de 1064 nm, chaque tir ayant une énergie de 340 mJ et une durée d'impulsion de 5 ns. Le chemin optique retenu pour le montage est illustré sur la figure 1.

Le collecteur de lumière 63 sert à recevoir la lumière émise par le plasma suite à un tir laser. Cette lumière est collectée et conduite par une fibre optique jusqu'au spectromètre 66.

Le collecteur de lumière est réglé pour collecter au mieux la lumière émise par le micro-plasma induit par laser sur les particules, et non le rayonnement émis par le plasma froid 45.

Le spectromètre 66 est un spectromètre de type Czesny-Turner. Il est utilisé avec une fenêtre spectrale de 30 nm.

Le spectromètre 66 est relié à un détecteur. Dans le système 10, ce détecteur est une caméra CCD intensifiée 68 qui permet un enregistrement de spectre résolu en temps avec une résolution temporelle minimum d'environ 2 ns (D'autres détecteurs plus simples peuvent éventuellement être utilisés).

Les spectres expérimentaux présentés ci-après représentent l'intensité du signal reçu par le spectromètre en fonction de la longueur d'onde $\lambda$ du rayonnement.

Ces spectres sont enregistrés avec les paramètres temporels suivants pour le détecteur : Le délai d'acquisition $t_d$ représente le temps écoulé entre le tir laser et le début de l'enregistrement du signal avec la caméra ; et le temps d'intégration $\Delta t$ représente le temps d'exposition de la matrice CCD 68 au signal lumineux du plasma.

## MISE EN OEUVRE DE LA METHODE D'ANALYSE ET DE DETECTION

### Création du plasma et acquisition des spectres d'émission

La méthode selon l'invention va maintenant être présentée dans deux exemples de mise en oeuvre, correspondant à deux lots de poudres de nanoparticules synthétisées par pyrolyse laser :

- une poudre de nanoparticules d'$Al_2O_3$ de forme sphérique, de diamètre 350 nm ; et
- une poudre de nanoparticules de SiC de forme non sphérique avec des diamètres de particules médians et maximaux de 800 et 1200 nm respectivement.

La mise en oeuvre du système 10 se fait en deux étapes.

Tout d'abord, on crée un plasma 45 entre les électrodes 22 du réacteur 26. (La méthode selon l'invention peut être appliquée naturellement à d'autres plasmas froids, quel que soit l'origine de ceux-ci ou le procédé ayant conduit à leur formation).

Ensuite, le dispositif de spectrométrie 60 est mis en oeuvre pour détecter les éléments (en l'occurrence, Al, O, Si et C) contenus dans les particules analysées. Pour cela, on procède aux opérations suivantes :

- on réalise un tir laser dans le plasma 45 à l'aide de la source laser 62 ;
- le rayonnement réfléchi par le plasma est collecté par le collecteur 63 et dirigé vers le spectromètre 66 ;
- pour chaque tir laser, le spectromètre 66 produit un spectre faisant apparaître les raies correspondant aux différents éléments soumis au tir laser ; et
- on analyse le ou les spectres produits par le spectromètre : pour détecter la présence de particules, et/ou analyser la composition stoechiométrique de celles-ci, et/ou évaluer la concentration en particules du plasma.

Lors de l'acquisition des différents spectres d'émission, la fenêtre d'acquisition commence après un délai d'acquisition $t_D$ valant moins de 100 ns après le tir laser, par exemple 30 ns.

Les raies correspondant aux éléments constituant les particules analysées sont présentées dans le tableau 1. (Aucune raie n'est indiquée pour l'oxygène, car les mesures ont été réalisées dans l'air - mais à faible pression -. Par conséquent, la détection d'oxygène n'aurait apporté aucune information quant à la nature des particules et n'a donc pas été effectuée).

Table 1

| Elément | $\lambda$ (nm) | Aki ($10^7$ S$^{-1}$) | Ei (eV) | Ek (eV) |
|---------|---------|------------|-----------|-----------|
| Al I    | 394.40058 | 4.93     | 0.0       | 3.1427210 |
|         | 396.15200 | 9.8      | 0.0138938 | 3.1427210 |
| C I     | 247.856   | 2.8      | 2.684011  | 7.684766  |
| Si I    | 288.1579  | 21.7     | 0.7809578 | 5.0823456 |

La table 1 indique les longueurs d'onde $\lambda$, les coefficients de probabilités de transition Aki, et les énergies des niveaux inférieurs Ei et supérieurs Ek des raies neutres de Al, C et Si détectées en analysant des particules de $SiC_x$ et $Al_2O_3$.

### Exploitation des spectres d'émission

Le dispositif 60 de spectrométrie induite par laser permet d'enregistrer un signal (ou un spectre) pour chaque tir laser.

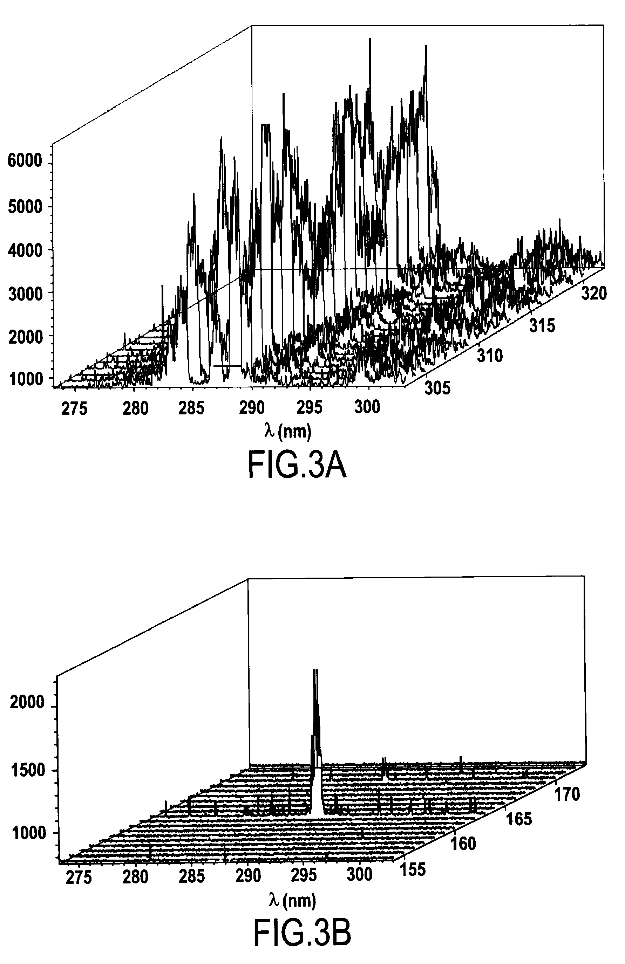

De tels spectres sont présentés par les figures 3A à 7B.

Un premier constat est que dans le cas des poudres d'$Al_2O_3$, chaque tir laser occasionne l'apparition de raies d'aluminium (Figure 3A). Inversement, dans le cas des poudres de SiC, seule une faible proportion des tirs laser fait apparaître les raies caractéristiques du silicium (Figure 3B). On conclut que seulement dans une faible proportion des tirs, une particule de SiC est atteinte par le tir laser (c'est-à-dire, se trouve dans le volume d'échantillonnage au moment du tir laser).Plus précisément, parmi les spectres de tirs laser présentés sur la figure 3B, seul l'un des tirs a atteint une particule de SiC et par suite provoqué l'émission de raies de silicium.

Le système 10 est donc sensible au point de permettre de détecter la présence d'une unique particule ! Plus généralement, le taux de détection des raies de silicium est bien sûr fonction de la concentration de particules dans le plasma 45.

On vérifie de plus sur la figure 3B que lorsqu'aucune particule n'est atteinte par le tir laser, le rayonnement capté par le spectromètre est insignifiant, ce qui résulte du fait qu'aucun micro-plasma n'a été créé dans l'enceinte par le tir laser.

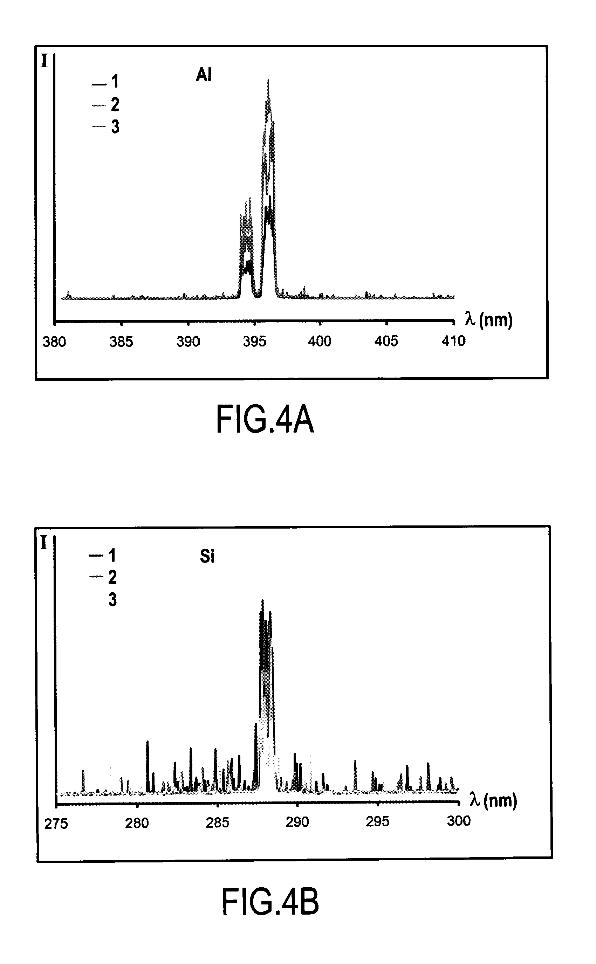

Une difficulté qui peut dans certains cas se présenter pour l'analyse de composition des particules, sur la base des spectres fournis par le spectromètre, est une certaine variabilité des spectres obtenus avec un seul tir laser. Cette variabilité est illustrée par les figures 4A et 4B. Chacune de ces figures montre les spectres obtenus lors de trois tirs laser différents. La figure 4A fait apparaître principalement les raies de l'aluminium (les particules sont formées d'$Al_2O_3$), et la figure 4B fait apparaître principalement les raies de silicium (les particules sont formées de SiC).

Pour remédier à ce problème, dans le système 10 l'analyse des spectres obtenus est réalisée sur la base d'un spectre moyen. Celui-ci est calculé en effectuant la moyenne des spectres obtenus pour un ensemble de tirs laser.

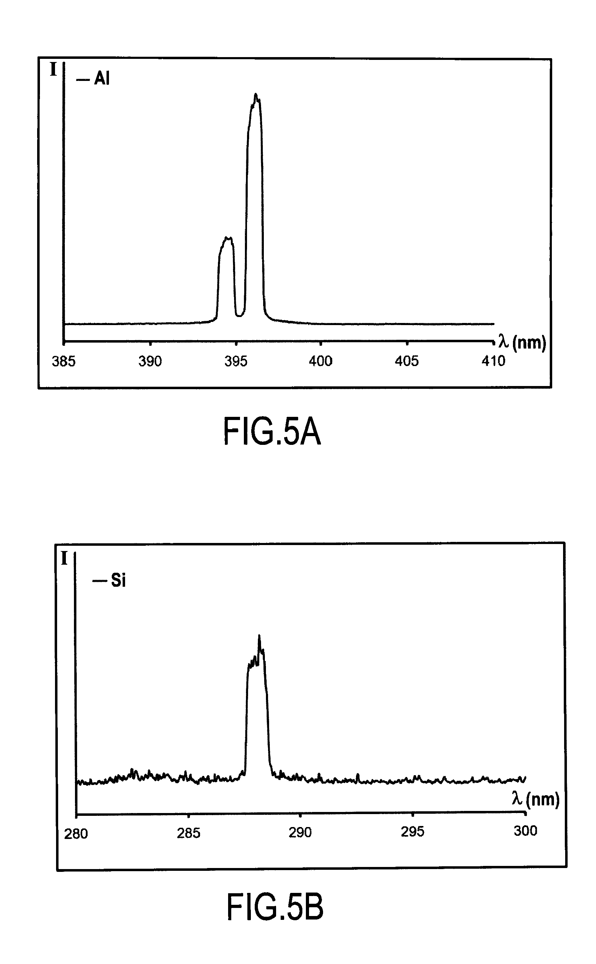

Les figures 5A et 5B fournissent un exemple de spectres obtenus par moyennage d'un ensemble de tirs laser (1400 tirs en l'occurrence), pour les raies d'aluminium (Fig.5A), et de silicium (Fig.5B).

Pour réduire le bruit de fond dans le spectre moyen, de préférence seuls les spectres dans lesquels les raies cherchées (aluminium ou respectivement silicium) apparaissent sont utilisés pour la détermination du spectre moyen.

Détermination de la stoechiométrie des particules

Sur la base des spectres fournis par le spectromètre optique (éventuellement moyennés comme indiqué précédemment), la stoechiométrie des particules présentes dans le plasma peut être déterminée.

La stoechiométrie est calculée en déterminant le rapport entre les intensités des raies d'émission des différents composants identifiés. Différentes méthodes de calcul sont possibles ; on peut pour plus de détails se référer par exemple à l'une des demandes de brevet français n°FR2937419 et n°FR2938066.

Estimation des concentrations

Le système 10 permet en outre de calculer ou d'estimer la concentration des particules dans le plasma.

Le volume d'échantillonnage par le faisceau laser peut être approximé par le volume focal en supposant que celui-ci occupe un faisceau gaussien parfait. Le volume d'échantillonnage est estimé à l'aide de l'équation suivante :

$$V = 19.2\ (f/D)^4\ \lambda^3 \qquad\qquad \text{(Equation 1)}$$

dans laquelle :

V est le volume d'échantillonnage du faisceau laser,
f la distance focale de la lentille,
D le diamètre du faisceau laser, et
$\lambda$ la longueur d'onde du faisceau laser.

L'estimation du volume focal donne $10^{-8}$ cm$^3$.

A partir du volume d'échantillonnage et en calculant le rapport entre le nombre de tirs dans lesquels les raies du silicium sont observées et le nombre total de tirs, on détermine alors la concentration de particules de SiC dans le plasma 45 étudié.

Avec les particules d'$Al_2O_3$, le taux d'échantillonnage est de 100%. Cela signifie qu'il y a toujours au moins une particule dans le volume focal. Par suite, une concentration minimale des particules peut être déduite : Celle-ci est de $10^8$ particules par cm$^3$ ou plus pour les nanopoudres d'$Al_2O_3$.

Dans le cas de particules présentes en quantité très faible, la concentration des particules de SiC peut au contraire non pas être minorée (comme pour les particules de $Al_2O_3$), mais estimée.

Le cas de l'analyse de particules de SiC illustré par la figure 3B peut être utilisé à titre d'exemple.

Dans le plasma considéré, très peu de tirs laser occasionnent l'apparition d'un spectre indiquant qu'une particule a été atteinte par le tir laser. Les particules sont très diluées, et il n'y a donc la plupart du temps que aucune ou qu'une seule particule dans le volume d'échantillonnage.

Le système 10 permet donc de distinguer les cas dans lesquels le tir laser atteint une particule de SiC, et les cas dans lesquels il n'en atteint pas. Il est donc possible de calculer la fraction, le pourcentage de tirs laser qui atteignent une particule de SiC. Ce pourcentage est assimilable à une probabilité de présence d'une particule dans le volume d'échantillonnage du faisceau laser.

A partir de cette information, on obtient alors une estimation de la concentration de particules de SiC dans le plama en divisant ce pourcentage par le volume d'échantillonnage calculé précédemment.

Evolution de l'intensité du signal en fonction du délai d'acquisition $t_D$ entre le tir laser et le début de l'enregistrement du signal

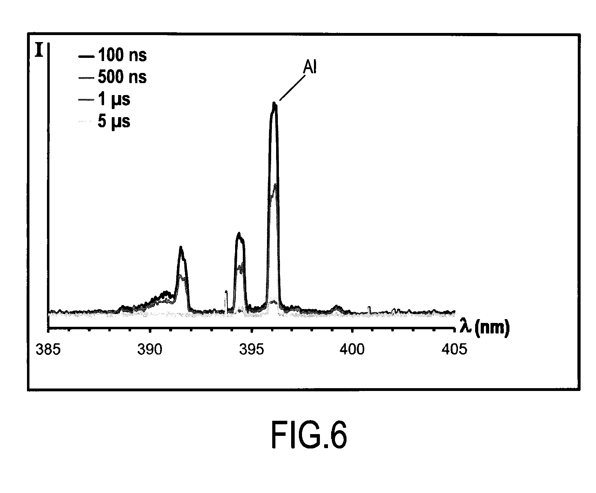

L'intensité du signal spectroscopique a été étudiée en fonction du délai $t_d$ entre le tir laser et le début de l'enregistrement du signal. Les spectres correspondants sont présentés sur la figure 6. Ces spectres montrent que la durée de vie du signal n'excède pas quelques microsecondes. De plus, l'intensité du bruit de fond ne varie pas en fonction du délai et le rapport signal sur bruit est optimal pour les délais les plus courts, c'est-à-dire des délais $t_D$ inférieurs à environ 100 ns.

Cette figure souligne donc l'importance d'un délai d'acquisition $t_D$ court entre le tir laser et le début de l'enregistrement par le spectromètre.

**Revendications**

1. Méthode d'analyse de particules, notamment de diamètre inférieur à 1 $\mu$m, **caractérisée en ce qu'**elle comporte les étapes suivantes :

   a) on fournit un plasma froid (45) dont une pression est inférieure à 10 hPa (mBar), et de préférence à 1 hPa (mBar) ;
   b) on effectue des tirs laser dans le plasma froid ;
   c) à l'aide d'un dispositif de spectrométrie optique (60), on acquiert des spectres d'émission de la lumière émise par le plasma suite aux tirs lasers, de telle manière que pour chaque spectre acquis, une période d'acquisition commence au plus tard 100 ns après le tir laser ; et
   d) on analyse les particules présentes dans le plasma à partir desdits spectres d'émission.

2. Méthode d'analyse selon la revendication 1, dans laquelle durant les étapes b) et c), les particules sont maintenues en lévitation dans le plasma.

3. Méthode d'analyse selon la revendication 1 ou 2, dans laquelle les particules sont maintenues en lévitation entre une électrode alimentée par une tension soit radiofréquence, soit continue, et une deuxième électrode portée à un potentiel fixe, par exemple de masse.

4. Méthode d'analyse selon l'une quelconque des revendications 1 à 3, dans laquelle dans le plasma froid, la concentration des particules est inférieure à $10^8$ particules/cm$^3$, voire $10^6$ particules/cm$^3$, voire même $10^5$ particules/cm$^3$.

5. Méthode d'analyse selon l'une quelconque des revendications 1 à 4, dans laquelle lors de l'étape a), les particules sont injectées dans le plasma principalement sous l'effet de la gravité.

6. Méthode d'analyse selon l'une quelconque des revendications 1 à 5, dans laquelle à l'étape d), on analyse la composition stoechiométrique des particules à partir des spectres d'émission en calculant un spectre d'émission moyen à partir d'une pluralité de spectres correspondant à une pluralité de tirs lasers.

7. Méthode d'analyse selon l'une quelconque des revendications 1 à 6, dans laquelle pour acquérir les spectres d'émission à l'étape c), le dispositif de spectrométrie optique comprend au moins une lentille utilisée pour concentrer la lumière émise par le plasma.

8. Système d'analyse (10) de particules, notamment de dimension inférieure à 1 $\mu$m, comprenant :

   des moyens (20) pour créer et entretenir un plasma froid (45) dont une pression est inférieure à 10 hPa (mBar), et de préférence 1 hPa (mBar) ;
   une source laser apte à effectuer des tirs laser dans le plasma ; et

un dispositif (60) de spectrométrie optique comprenant un collecteur de lumière (63) et un spectromètre optique (66) relié à un détecteur (68),

le dispositif de spectrométrie optique permettant l'acquisition de spectres d'émission de la lumière émise par le plasma suite aux tirs lasers de telle manière que pour chaque spectre acquis, une période d'acquisition commence au plus tard 100 ns après le tir laser.

9. Système d'analyse selon la revendication 8, dans lequel lesdits moyens (20) pour créer et entretenir un plasma froid comprennent une enceinte (26) dans laquelle sont placées des électrodes (22), et des moyens aptes à appliquer une tension aux électrodes de telle sorte que des particules présentes dans le plasma soient maintenues en lévitation dans celui-ci, le système d'analyse comprenant en outre un dispositif (20) d'injection de particules dans l'enceinte (26).

10. Système d'analyse selon la revendication 8 ou 9, dont les moyens (20) pour créer et entretenir un plasma froid (45) sont adaptés pour créer et entretenir un plasma présentant une concentration de particules inférieure à $10^8$ particules/cm$^3$, voire $10^6$ particules/cm$^3$, voire même $10^5$ particules/cm$^3$; et à l'étape c), les spectres d'émission acquis proviennent dudit plasma contenant une concentration de particules inférieure à $10^8$ particules/cm$^3$, voire $10^6$ particules/cm$^3$, voire même $10^5$ particules/cm$^3$.

11. Système d'analyse selon l'une quelconque des revendications 8 à 10, dont le collecteur de lumière (63) comprend au moins une lentille apte à concentrer la lumière émise par le plasma.

**Patentansprüche**

1. Verfahren zum Analysieren von Partikeln, insbesondere mit einem Durchmesser von weniger als 1 $\mu$m, **dadurch gekennzeichnet, dass** es die folgenden Schritte umfasst:

a) Bereitstellen eines kalten Plasmas (45), von dem ein Druck geringer als 10 hPa (mBar) und vorzugsweise geringer als 1 hPa (mBar) ist,

b) Ausführen von Laserschüssen in dem kalten Plasma,

c) Gewinnen von Emissionsspektren des durch das Plasma infolge der Laserschüsse emittierten Lichts mit Hilfe einer optischen Spektrometrievorrichtung (60), derart, dass für jedes gewonnene Spektrum ein Erfassungszeitraum spätestens 100 ns nach dem Laserschuss beginnt, und

d) Analysieren der in dem Plasma vorhandenen Partikeln anhand der Emissionsspektren.

2. Analyseverfahren nach Anspruch 1, bei dem während der Schritte b) und c) die Partikel in dem Plasma in Levitation gehalten werden.

3. Analyseverfahren nach Anspruch 1 oder 2, bei dem die Partikel zwischen einer Elektrode, die entweder mit einer Radiofrequenz- oder Gleichspannung versorgt wird, und einer zweiten Elektrode, die auf ein festes Potential, beispielsweise der Masse, gelegt ist, in Levitation gehalten werden.

4. Analyseverfahren nach einem der Ansprüche 1 bis 3, bei dem in dem kalten Plasma die Konzentration der Partikel geringer als $10^8$ Partikel/cm$^3$, sogar $10^6$ Partikel/cm$^3$, ja sogar $10^5$ Partikel/cm$^3$ ist.

5. Analyseverfahren nach einem der Ansprüche 1 bis 4, bei dem während des Schrittes a) die Partikel hauptsächlich unter der Wirkung der Schwerkraft in das Plasma injiziert werden.

6. Analyseverfahren nach einem der Ansprüche 1 bis 5, bei dem bei Schritt d) die stöchiometrische Zusammensetzung der Partikel mittels der Emissionsspektren durch Berechnen eines durchschnittlichen Emissionsspektrums anhand einer Vielzahl von Spektren, die einer Vielzahl von Laserschüssen entsprechen, analysiert wird.

7. Analyseverfahren nach einem der Ansprüche 1 bis 6, bei dem für die Gewinnung der Emissionsspektren bei Schritt c) die optische Spektrometrievorrichtung wenigstens eine Linse umfasst, die verwendet wird, um das durch das Plasma emittierte Licht zu konzentrieren.

8. System zur Analyse (10) von Partikeln, insbesondere mit einer Größe von weniger als 1 $\mu$m, umfassend:

Mittel (20) zum Erzeugen und Aufrechterhalten eines kalten Plasmas (45), von dem ein Druck geringer als 10 hPa (mBar) und vorzugsweise 1 hPa (mBar) ist,

eine Laserquelle, die geeignet ist, Laserschüsse in dem Plasma auszuführen, und

eine optische Spektrometrievorrichtung (60), die einen Lichtsammler (63) und ein optisches Spektrometer (66), das mit einem Detektor (68) verbunden ist, umfasst,

wobei die optische Spektrometrievorrichtung die Gewinnung von Emissionsspektren des durch das Plasma infolge der Laserschüsse emittierten Lichts ermöglicht, derart, dass für jedes gewonnene Spektrum ein Erfassungszeitraum spätestens 100 ns nach dem Laserschuss beginnt.

9. Analysesystem nach Anspruch 8, bei dem die Mittel (20) zum Erzeugen und Aufrechterhalten eines kalten Plasmas einen geschlossenen Raum (26) umfassen, in dem Elektroden (22) und Mittel, die geeignet sind, eine Spannung an die Elektroden anzulegen, angeordnet sind, derart, dass in dem Plasma vorhandene Partikel in diesem in Levitation gehalten werden, wobei das Analysesystem ferner eine Vorrichtung (20) zum Injizieren von Partikeln in den geschlossenen Raum (26) umfasst.

10. Analysesystem nach Anspruch 8 oder 9, dessen Mittel (20) zum Erzeugen und Aufrechterhalten eines kalten Plasmas (45) dazu ausgelegt sind, ein Plasma zu erzeugen und aufrechtzuerhalten, das eine Partikelkonzentration von weniger als $10^8$ Partikel/cm$^3$, sogar $10^6$ Partikel/cm$^3$, ja sogar $10^5$ Partikel/cm$^3$ aufweist, und bei Schritt c) die gewonnenen Emissionsspektren von dem Plasma, das eine Partikelkonzentration von weniger als $10^8$ Partikel/cm$^3$, sogar $10^6$ Partikel/cm$^3$, ja sogar $10^5$ Partikel/cm$^3$ enthält, stammen.

11. Analysesystem nach einem der Ansprüche 8 bis 10, dessen Lichtsammler (63) wenigstens eine Linse umfasst, die geeignet ist, das durch das Plasma emittierte Licht zu konzentrieren.

## Claims

1. An analysis method for analyzing particles, in particular particles of diameter less than 1 $\mu$m, the method being **characterized in that** it comprises the following steps:

   a) providing a cold plasma (45) at a pressure less than 10 hPa (mbar), and preferably less than 1 hPa (mbar);
   b) firing laser shots into the cold plasma;
   c) using an optical spectrometer device (60), acquiring emission spectra of the light emitted by the plasma as a result of the laser shots, in such a manner that for each acquired spectrum, an acquisition period begins no later than 100 ns after the laser shot; and
   d) analyzing the particles present in the plasma on the basis of said emission spectra.

2. An analysis method according to claim 1, wherein during steps b) and c), the particles are kept levitated in the plasma.

3. An analysis method according to claim 1 or claim 2, wherein the particles are kept in levitation between an electrode powered by a voltage that is either RF or else DC, and a second electrode at a fixed potential, e.g. ground potential.

4. An analysis method according to any one of claims 1 to 3, wherein the concentration of particles in the cold plasma is less than $10^8$ particles/cm$^3$, or indeed $10^6$ particles/cm$^3$, or even $10^5$ particles/cm$^3$.

5. An analysis method according to any one of claims 1 to 4, wherein, during step a), the particles are injected into the plasma mainly under the effect of gravity.

6. An analysis method according to any one of claims 1 to 5, wherein, in step d), the stoichiometric composition of the particles is analyzed on the basis of the emission spectra by calculating a mean emission spectrum from a plurality of emission spectra corresponding to a plurality of laser shots.

7. An analysis method according to any one of claims 1 to 6, wherein, in order to acquire the emission spectra in step c), the optical spectrometer device has at least one lens used for concentrating the light emitted by the plasma.

8. An analysis system (10) for analyzing particles, in particular particles of dimensions less than 1 $\mu$m, the system comprising:

• means (20) for creating and maintaining a cold plasma (45) at a pressure of less than 10 hPa (mbar), and preferably less than 1 hPa (mbar);
• a laser source suitable for firing laser shots into the plasma; and
• an optical spectrometer device (60) having a light collector (63) and an optical spectrometer (66) connected to a detector (68);

the optical spectrometer device enabling emission spectra of the light emitted by the plasma as a result of the laser shots to be acquired in such a manner that for each acquired spectrum an acquisition period begins no later than 100 ns after the laser shot.

9. An analysis system according to claim 8, wherein said means (20) for creating and maintaining a cold plasma comprise an enclosure (26) having electrodes (22) placed therein and means for applying a voltage to the electrodes in such a manner that particles present in the plasma are kept in levitation in the plasma, the analysis system also having a device (20) for injecting particles into the enclosure (26).

10. An analysis system according to claim 8 or claim 9, in which the means (20) for creating and maintaining a cold plasma (45) are adapted to create and maintain a plasma presenting a concentration of particles that is less than $10^8$ particles/cm$^3$, or indeed $10^6$ particles/cm$^3$, or even $10^5$ particles/cm$^3$; and in step c), the acquired emission spectra come from said plasma containing a concentration of particles that is less than $10^8$ particles/cm$^3$, or indeed $10^6$ particles/cm$^3$, or even $10^5$ particles/cm$^3$.

11. An analysis system according to any one of claims 8 to 10, in which the light collector (63) includes at least one lens suitable for concentrating the light emitted by the plasma.

FIG.1

FIG.2

FIG.3A

FIG.3B

FIG.4A

FIG.4B

FIG.5A

FIG.5B

FIG.6

## RÉFÉRENCES CITÉES DANS LA DESCRIPTION

**Documents brevets cités dans la description**

- FR 2937419

- FR 2938066

**Littérature non-brevet citée dans la description**

- **MM.EOM G.S. et al.** Applied Physics Letter. AIP American Institute of Physics, 11 Août 2003, vol. 83, 1261-1263